**Europäisches Patentamt**

**European Patent Office**

**Office européen des brevets**

(11) Publication number : **0 488 962 A2**

# EUROPEAN PATENT APPLICATION

(21) Application number : **91830466.8**

(22) Date of filing : **29.10.91**

(51) Int. Cl.⁵ : **B23K 35/00**

(30) Priority : **30.10.90 IT 485090**

(43) Date of publication of application :
**03.06.92 Bulletin 92/23**

(84) Designated Contracting States :
**AT BE CH DE DK ES FR GB GR LI LU NL SE**

(71) Applicant : **Tessari, Pietro**
**frazione Pochi n. 91**
**I-39040 Salorno (BZ) (IT)**

(72) Inventor : **Tessari, Pietro**
**frazione Pochi n. 91**
**I-39040 Salorno (BZ) (IT)**

(74) Representative : **Lanzoni, Luciano**
**c/o BUGNION S.p.A. Via G. Garibaldi n. 19**
**I-37121 Verona (IT)**

(54) **Welding process for galvanized metals.**

(57) The present invention relates to a welding process for galvanized metals. Before or during the welding process the surfaces designed to be welded and brought into contact with each other are spread with finely chopped-up particles of metal material so as to form a zinc alloy having a sublimation temperature higher than the melting temperature of the metal to be welded. Said particles of metal material can consist of various metals or compositions and alloys thereof and can also be mixed with non-metallic compositions. The zinc thus bound will be therefore unable to combine with the oxygen of the surrounding atmosphere thereby being converted to zinc oxide, which is the main hindrance for the correct welding of galvanized metals.

EP 0 488 962 A2

The present invention relates to a welding process for galvanized metals.

More broadly the process in question relates to the welding both of zinc-plated metals and compositions formed with zinc alloys.

Presently, in accordance with the known art, there are various systems adapted to weld zinc-plated metal parts or metals consisting of zinc alloys.

When alloys in which there is the presence of zinc (for example in case of brass) are to be welded, besides obviously gas-flame brazing methods with addition of weld material that usually melts at a temperature lower than that of the material to be welded, the tungsten inert gas (TIG) welding system is used. This process is not however very easy due to the formation of zinc oxide as a result of the combination of the sublimated zinc with the oxygen present in the atmosphere. This welding system is not in addition very appropriate when the thickness of the material to be welded is lower than approximately 0.8 mm.

In the metal inert gas (MIG) welding, satisfactory results can be achieved as far as thickness of about 0.6 mm are concerned. In these welds however there is a marked alteration of the welded surfaces because in the long run there is the formation of dust, oxides, etc.

Not very satisfactory results too are achieved in the case of resistance weldings. In fact, when this solution is adopted, in addition to the alteration of the rust inhibiting property proper to surface galvanization, which brings about the formation of zinc oxide, that is an electric insulator, frequent servicing interventions are necessary in order to restore the electrode surfaces, so that said electrodes are subject to quick wear and consequently this type of welding is not convenient in automatic systems.

Consequently it is a primary object of the present invention to eliminate the above mentioned drawbacks relating to welding systems of known type, by providing a welding process enabling zinc-containing or zinc-plated materials to be welded while avoiding the formation of zinc oxides by transforming the zinc into a metal alloy.

The foregoing and further objects are attained by the welding process being the object of the present invention in which it is provided that before or during the welding process the surfaces designed to be welded and brought into contact with each other are spread with finely chopped-up metal particles so as to form a zinc alloy having a sublimation temperature higher than the melting temperature of the metal to be welded.

Further features and advantages of the present invention will become more apparent in the course of the following description.

In the welding process of the invention during the heating of the parts to be welded, the zinc molecules come into contact with the particles of metal material previously reduced into very fine powder (the particle sizes are included between 0.00001 and 0.5 mm) capable of binding with zinc, which are spread on the surfaces designed to be welded. As a result a metal alloy is formed which by absorbing the zinc will prevent it from combining with the gases present in the surrounding atmosphere thereby forming above all zinc oxide. The metal alloy thus formed, since it has a sublimation temperature higher than the melting temperature of the material to be welded, partly will deposit on the weld edges and partly will be incorporated into the welding bath and/or welding core depending upon the type of process used.

The particles of metal material can consist of various metals, compositions or alloys thereof such ar for example copper, nickel, aluminium, chromium, silver, etc.

In addition, these particles of metal material can be mixed, before being spread on the metal to be welded, with non-metallic compositions such as for example silicon or cellulose, or the metal material can be present in the form of a solution.

The advantages of the process of the invention are apparent above all when used in resistance welding, in that the welding electrodes usually made of copper, do not become covered with zinc oxide (which is an insulating material and therefore needs to be frequently removed). So the electrodes ensure a constant and uninterrupted passage of current which results in welds of uniform quality and good power of endurance.

Another advantage consists in that, since the zinc does not bind with the electrode contact surfaces thereby usually forming brass (if the electrodes are of copper and/or alloys and sinterizations thereof), the erosion of said electrodes will be much more reduced.

By virtue of the above advantages, the present invention is adapted for application to normal manually-operable resistance spot-welders, but above all enables the construction of roll sequential-seam machines carrying out automatic weldings since the electrodes can resist wear over thousands of cycles ensuring a constant quality without requiring frequent human interventions.

The application of powders and/or metal solutions, which will bind with zinc, can be carried out on the surfaces in different ways (for example by blowing in, injection, coating, electrolytically, etc.), by hand or with the aid of automatic apparatus (pumps, blowers, atomizers, injectors, anode-catode apparatus, etc.) and the application to the surfaces can be executed before welding them together or in a single sequential operation (in the case of resistance welding) as the electrodes are being moved close to each other or simultaneously with the welding process, in the case of TIG welding or MIG welding or in the plasma-arc welding also mixed with the inert gas always used in these systems.

The invention can apply to many fields, even with the use of laser beams and at all events to all cases in which zinc-containing or zinc-plated materials are to be welded together, as far as pipes, strips, ribbons, rolled sections, nets, round bars, etc. are concerned. It is also used for welding pieces of complicated shape and working, for example in the field of conditioning and ventilating apparatus, sheet metal workings, carpentry, motor-vehicule industry and obviously in all sectors in which it is required that in the welding process the antioxidant surface features of the zinc-plated iron materials and/or zinc alloys should not be altered.

The process in question can be used in the most different positioning conditions of the parts to be welded (side by side edges, overlapped edges, opposite edges, several parts simultaneously, said positionings being intended in the vertical, horizontal and slanting directions, etc.), because the powder can be mixed with water or other liquids in order to facilitate the spreading thereof and/or avoid a too great volatility of the same, or it is possible to expressly utilize the volatility itself and so blow in the powder with inert gases, even electrostatically, or dissolve it in salts or acids and use electrolytic processes.

Obviously many modifications and variations can be made to the invention as conceived, all of them falling within the scope of the inventive idea.

## Claims

1. A welding process for galvanized metals characterized in that before or during the welding process the surfaces designed to be welded and brought into contact with each other are spread with finely chopped-up metal particles or metals in solution so as to form a zinc alloy having a sublimation temperature higher than the melting temperature of the metal to be welded.

2. A welding process for galvanized metals characterized in that before or during the welding process the surfaces designed to be welded and brought into contact with each other are spread with finely chopped-up metal particles or particles in the form of different solutions so as to form a zinc alloy which, even if it sublimates, does not form zinc oxide.

3. A process according to claim 1 or 2, characterized in that said particles of metal material consist of copper or compositions and alloys thereof.

4. A process according to claim 1 or 2, characterized in that said particles of metal material consist of nickel or compositions and alloys thereof.

5. A process according to claim 1 or 2, characterized in that said particles of metal material consist of aluminium or compositions and alloys thereof.

6. A process according to claim 1 or 2, characterized in that said particles of metal material consist of chromium or compositions and alloys thereof.

7. A process according to claim 1 or 2, characterized in that said particles of metal material consist of silver or compositions and alloys thereof.

8. A process according to claim 1 or 2, characterized in that said particles of metal material are mixed with non-metallic compositions before being spread on the metal to be welded.

9. A process according to claim 1 or 2, characterized in that said particles have sizes included between 0.00001 and 0.5 mm.